# EUROPEAN PATENT SPECIFICATION

(11) **EP 1 936 436 B1**
(45) Date of publication and mention of the grant of the patent: **13.10.2010**
(21) Application number: 05812091.6
(22) Date of filing: 24.11.2005
(51) Int. Cl.: G03B 17/56, F16M 11/16, F16M 11/26

(54) **A TRIPOD FOR CAMERA**
STATIV FÜR EINE KAMERA
STATIF POUR UNE CAMERA

(30) Priority: 20.09.2005 CN 200510037323
(43) Date of publication of application: 25.06.2008
(73) Proprietor: Yang, Yongjian, Gunagdong 510-050 (CN)
(72) Inventor: Yang, Yongjian, Gunagdong 510-050 (CN)
(74) Representative: Rees, Simon John Lewis
(86) International application number: PCT/CN2005/001991
(87) International publication number: WO 2007/033535

(56) References cited:
- CN-A- 1 331 787
- CN-Y- 2 449 043
- FR-A- 2 203 486
- FR-A- 2 366 509
- JP-A- 09 079 482
- JP-A- 2003 057 741
- US-A- 4 419 025
- US-A- 5 288 044

## Description

### Technical fields of the invention

The present invention relates to a tripod for video or camera, especially a kind of small size, lightweight, and convenient professional tripod for outdoors. It belongs to the technical fields of the photographic equipment.

### Prior art of the invention

Tripod for camera is usually needed when taking photos. The tripod generally consists of three legs. Each leg is composed of certain telescopic tubes. The legs will turn to open when the tripod in use. The legs will have to be opened to an optimum angle in order to make sure the tripod not being tipped over after the camera installed, especially when long lens is used. Also, the tubes have to be adjusted to fix the height of the tripod. In prior art, the tripod for camera includes a screw clip to control opening angle of the legs. This type of locking device is neither convenient nor insecure. Also there is no mechanism to control the flexibility of the tubes, as a result slippage may easily occur and it is hard to control the radial rotation of the legs, which bring inconvenient to the camera tripod user.

US 5,288,044 discloses a camera tripod head assembly.

### Purpose of the invention

The purpose of the present invention is to provide a tripod for camera. In the present invention, a trigger controlled opening and closing mechanism is provided for adjusting quickly the leg opening angle, and inner expanding type of locking mechanism is provided between the tubes, also telescopic central axis is provided. In the present invention, in order to make the operation conveniently and performance safely, pawl is provided to control the opening angle of the legs of the tripod, and taper screw is cooperated with the taper nut to connect and control the radial rotation of the legs.

### Technology of the invention

The present invention, a tripod for camera is provided as defined in independent claim 1.

In the tripod, the inner expanding type of locking mechanism between the leg tubes is comprised of tube base, orientation ring, protective rubber sheath, tubes, tube screw, nut and nut cover. The tubes pass through the tube bases and connect with the tripod body. The taper nut is provided inside of the tubes, and tube screw is installed at the tube joints. The taper screw at the tube joints is cooperated rotatablely with the taper nut within the tube.

The central axis of the tripod has a telescopic construction of two or more segments, and passes through the center of the tripod body.

In the present invention, the turntable with scale is provided on the top of the tripod central axis, and the withdrawing type of pothook is provided on the bottom thereof.

In the present invention, the surfaces of both the metallic tubes and the central axis are covered with carbon fiber layers, which make them into carbon fiber strengthen metallic tubes.

The present invention works as below:
1. When need to open the tripod legs, first pull the handle, so the handle will drive the rocker to put up the pawl and make the legs dispread to a designated angle, the spring for the pawl will push the pawl back to the original status on the tube base, and prevent the tube from dispreading. When need to close the tripod legs, rotate the ratch on the tube base around the pawl, so the legs can be retrieved to closing status.
2. The taper screw is provided in the tube joint and cooperated with the taper nut within the tube; so that the telescopic connection between the tubes will limit the tubes rotation, and when the nut cover of any tube is tight or release, other tube will not rotate together.

The advantages of the present invention are as following:
Compared with the prior tripods, the present invention applies trigger controlled opening and closing mechanism for adjusting quickly the leg opening angle to control the opening angle of the leg. The taper screw is tightly cooperated with the taper nut to limit the leg radial rotation. And the inner expanding type of locking mechanism between the tubes provides comparative locking force as the screw locking system of the prior tripods. The telescopic mechanism of the central axis enlarges the extension range of the legs and reduces the weight. The present invention is convenient for operation, light weighted, has a strong clamped force and a performance of security.

### Brief description of drawings

Figure 1 is a perspective view of the tripod for camera according to the present invention;
Figure 2 is a structure view of the tripod for camera according to the present invention;
Figure 3 is an exploded view of the turntable of the tripod for camera according to the present invention;
Figure 4 is a structure view of the turntable of the tripod for camera according to the present invention;
Figure 5 is a structure view of the pothook of the tripod for camera according to the present invention;
Figure 6 is an exploded view of the leg opening and closing mechanism of the tripod for camera according to the present invention;
Figure 7 is a structure view of the leg opening and closing mechanism of the tripod for camera according to the present invention;
Figure 8 is an exploded view of the elevator lever of the tripod for camera according to the present invention;
Figure 9 is an exploded view of the leg of the tripod for camera according to the present invention;
Figure 10 is a structure view of the inner expanding type of locking mechanism of the tripod for camera according to the present invention (portion I, II in Figure 2);
Figure 11 is a cross section view of the leg with carbon-fiber layers according to the present invention (circular);
Figure 11A is a cross section view of the leg with carbon-fiber layers according to the present invention (octagon);
Figure 11B is a cross section view of the leg with carbon-fiber layers according to the present invention (Inner: octagon; outer: circular);
Figure 12 is a section view of the leg telescope locking mechanism according to the present invention.

### Embodiments

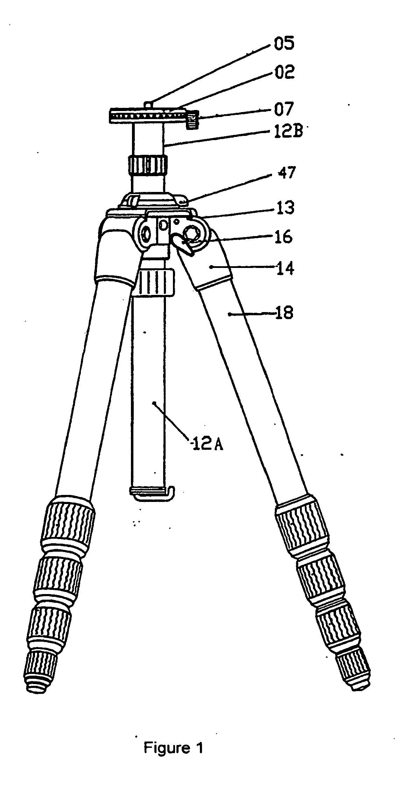

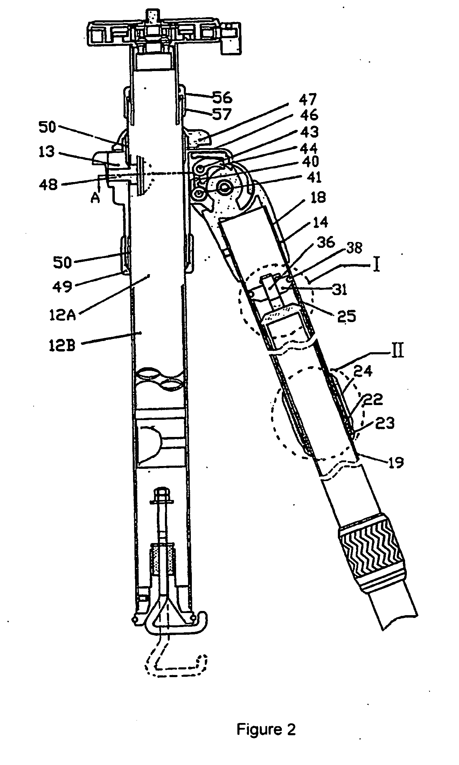

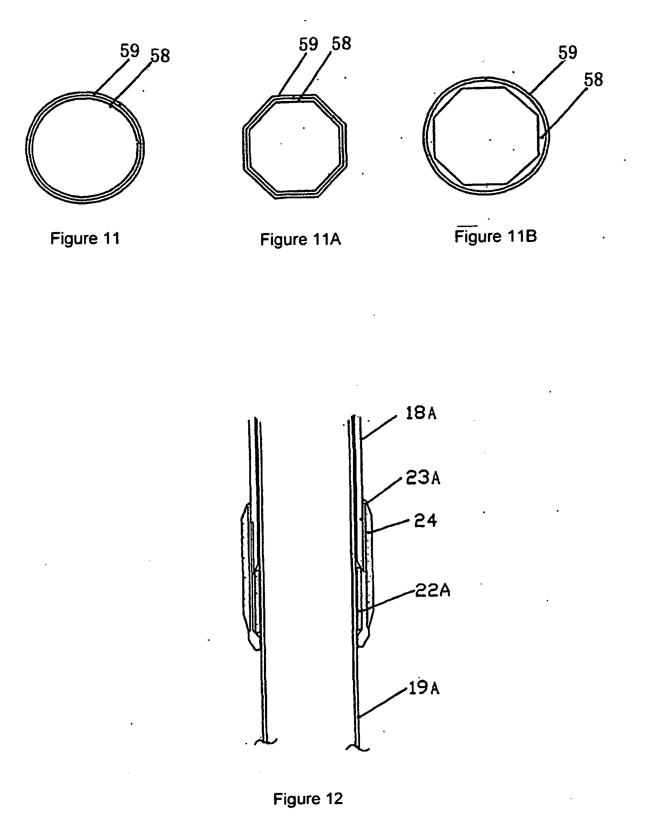

As shown in figure 1-12, the opening and closing mechanism is provided at the head of the tripod for camera in the present invention. The tube 18 installed on the tube base 14 connects with the tripod body 13. The central axis is consisted of two segments: elevator lever 12A and elevator lever 12B, wherein the central axis elevator lever 12B passes though tripod body 13. The nuts 57 for elevator levers are set in the upside of the tripod body 13. The turntable 02 is installed on the top of tripod, and there is a pothook 55 at the bottom of the elevator lever 12B.

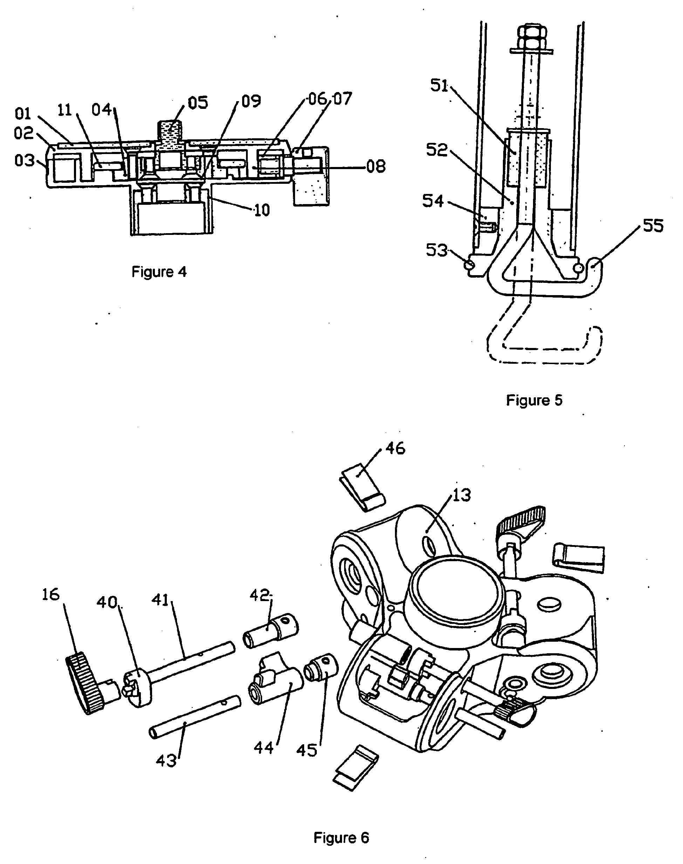

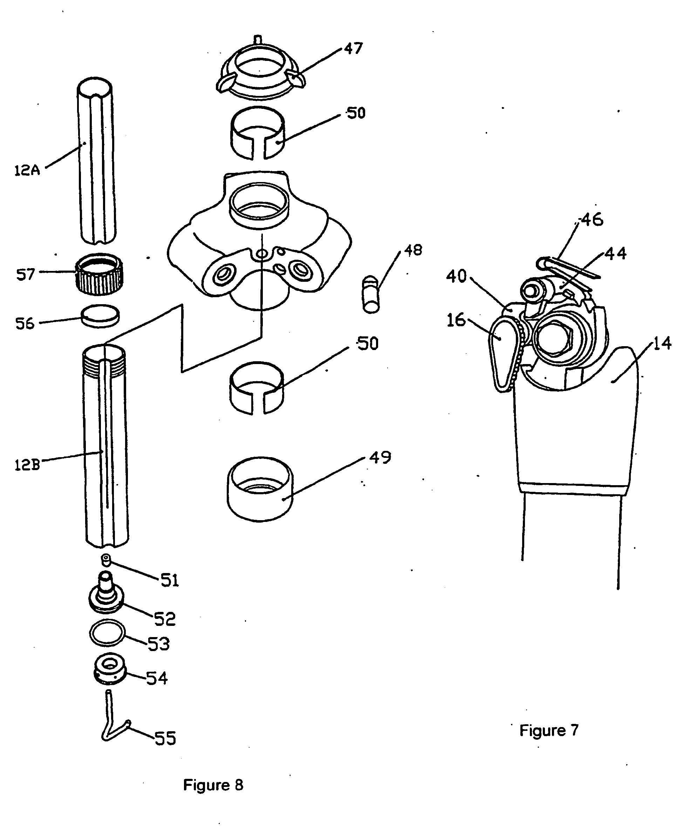

The opening and closing mechanism for adjusting the leg opening angle according to the present invention is shown in figure 6 and 7. The pawl 44 is sheathed onto the pawl axis 43; and at the other end of the pawl axis, the wrap 45 for fixing the pawl is installed. The pawl axis 43 passes across the tripod body 13 horizontally and parallels with the rocker 40. The rocker 40 is installed in the end of the handle axis 41 and connected with the handle 16. At the other end of the handle axis 41, there is installed a wrap 42 for fixing the handle axis. The ratch engaged with the pawl is provided on the tube base 14. When need to open the tripod legs, first pull the handle 16, so the handle will drive the rocker 40 to put up the pawl 44 and make the legs dispread to a designated angle, the spring for the pawl 46 will push the pawl 44 back to the original status on the tube base 14, and prevent the tube from dispreading.

During operation of the tripod, the opening and closing mechanism for adjusting quickly the leg opening angle is controlled by trigger, pull the leg outward, the 1^{st} teeth of the ratch on the tube base 14 is limited by the pawl 44, and this is the most commonest angle. When larger dispread angle is required, push the handle 16, so that the rocker 40 and the heave gradient block provided on the pawl will turn to a moment wring, as a result the pawl 44 overcomes the spring resistance and opens up; at the same time pull the leg, and the dispread angle will enlarge to the next level; then release the handle, the pawl will be blocked on the 2^{st} teeth of the ratch with the help of the spring. Similarly, when the dispread angle needed to charge from large to small or needed to close entirely, just trigger the leg inside, because the ratch is designed with unilateral pawl, the pawl can be replace automatically at the same time.

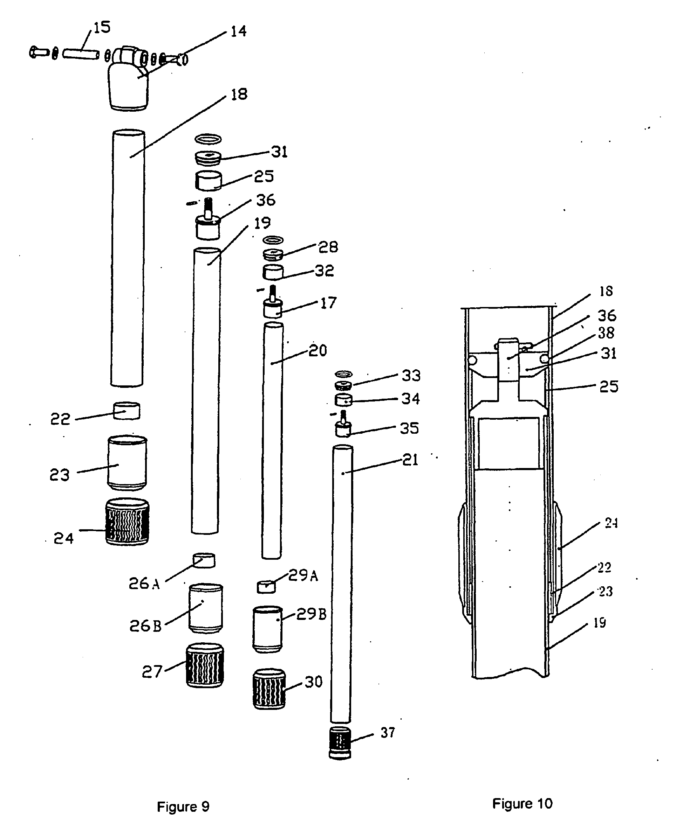

The legs of the present invention are consisted of four segment tubes, as shown in figure 9. The tube 18 gets across tube base 14 and orientation wrap 15 to connect with tripod body 13. And a protective rubber sheath 24 is sheathed on the tube 18. Taper nut 31, 28 and 33 are provided respectively inside the tube 18, 19 and 20. On the bottom of the screw 36, 17 and 35 there are provided conical threads respectively. The taper screw in the tube joint is cooperated rotatable with the taper nut within the tube. When the tube is installed, the top of the tube 18 sheathed inside the tube base 14; tube 19, 20 and 21 sheathed inside tube 18 in sequence with the help of screws 36, 17, 35 on the tube joint and the tube sheathes 25, 32, 34. The innermost tube 21 comes by an orientation ring 29 and sheath 34, then sheathes into tube 20; then tube 20 sheathes into tube 19, 18 in sequence. Tube sheath nuts 23, 26B, 29B are provided respectively at the end of the tube 18, 19 and 20 for connection and locking tightly. Tube plastic sheathes 24, 27 and 30 are provided respectively outside the nuts 23, 26B and 29B. At the end of the tube 21, a leg cap 37 is provided to ensure the tripod keeping balance on floor. Because the taper screw is cooperated rotatablely with the taper nut within the tube joint and the tube, during telescopic connection among the tubes 18, 19, 20 and 21, tube rotation can be limited, so when the nut cover of any tube is tight or release other tube will not rotate together.

As shown in figure 9 and 10, when the tube 19 rotates clockwise in relative to the tube 18, the screw 36 on the tube 19 rotates in synchronization. With the help of the friction between a rubber ring 38 and the tube 18, the nut 31 is inclined to keep still in relative to the tube 18, so rotates in relative to the tube 19. In the function of the threads, there is opposite rotation between the nut 31 and the screw 36, and the conical thread inside them makes a sheath 25 to inflate so as to press the inner wall of the tube 19, as a result the tube is locked tightly. In the locking status, when the two legs rotate inversely, the screw 36 also rotate contrary to the nut 31, so the conical thread will not press the sheath 25, the sheath will come back to original status, the two tubes will be in release status to open up. If the joints of multi-segments are in release status, the largest tube and the smallest tube will relatively rotate clockwise and continuously, and one of the joints will first complete the said locking movement, locking movement will be sequentially transferred to other joints till all of them are locked tightly.

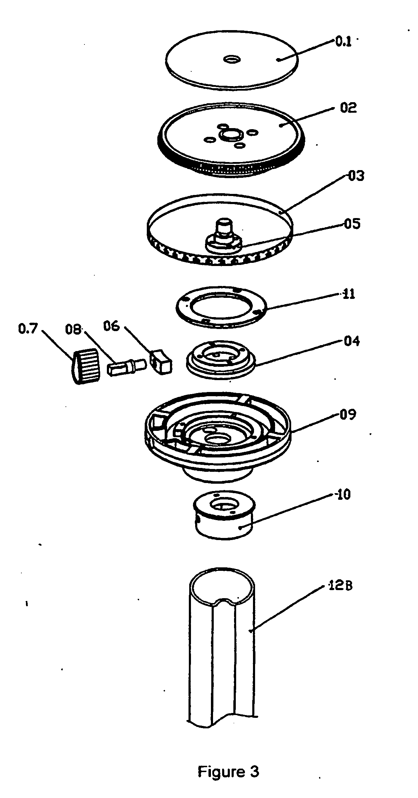

In the present invention, the turntable 02 with scale 03 is provided on the top of the tripod central axis, as shown in figure 3 and figure 4. The connecting screw 05 is installed onto the turntable housing 09 and covered with a washer 11, with the help of the connecting screw 05 fixes on the camera, the orientation ring 04 fixes the turntable to the turntable housing 09, a turntable mat 01 is mounted upon the turntable 02. The stem 07 is installed on the side of the turntable 02 and fixed onto the turntable by the stem screw 08 and the holder 06. The angle of the turntable rotation can be controlled by the stem. On the top of the elevator lever 12B within the central axis, the plug for elevator lever 10 is provided, and the turntable housing 09 is mounted upon it. The guide key-press 48 for the elevator level is provided in the elevator level so that the elevator level can lift and fall along it to adjust the height of the tripod. The locking nut 47 is installed upon the body 13 to lock the tripod tightly; the inner elevator level and the outer elevator level can be locked tightly by the elevator level nut 57, inner elevator level locking loop 56 and outer elevator level loop 50, locking nut 49 respectively.

In the present invention, pothook 55 is provided on the bottom of the elevator level 12B, as shown in figure 8. The rubber sheath 51 is sheathed on the flying ring 52; and the plug for elevator level 54 clamps tightly the flying ring 52, fixed to the elevator level 12B by bolt. The straight part of the pothook 55 passes through the flying ring 52 and the rubber sheath 51 vertically. At the end of the pothook, nut is provided; the hook part of the pothook is extended out of the elevator level. The pothook can be pushed inward and hidden in the elevator level when it is in leisure; and pulled out to hang other things such as camera bag to increase the weight of the tripod when it is needed to use, so that the center of gravity for the tripod can be lower, which may help to keep the tripod in balance to be safe.

In the present invention, the surface of metal tube 58 of the tripod is wrapped with carbon fiber layer 59, which makes it more strengthen. The carbon fiber layer has strengthened the metal tube, also prevents the skin from sticking to the metal tube in cold weather. Besides, the central axis tube also can be wrapped with carbon fiber layer.

## Claims

1. A tripod for camera comprising:
- a tripod body (13);
- leg tubes (18), each leg tube being connected to the tripod body (13) through a leg tube base (14);
- a central axis formed by elevator levers (12A, 12B), wherein the central axis, in operation, passes vertically through the tripod body (13);
- a turntable (02) provided on the upper end of the central axis;
- a pothook (55) provided at the lower end of the central axis;
- a locking nut (47) installed on the tripod body (13) for locking the central axis;
- an inner expanding type locking mechanism inside each leg tube (18); and
- an opening and closing mechanism for adjusting the opening angle of the leg tubes (18);
**characterised in that**:
said opening and closing mechanism comprises for each leg tube:
- a handle axis (41) having a rocker (40) connected with a handle (16);
- a pawl axis (43) having a sheathed pawl (44) and a wrap (45) for fixing the pawl (44);
- a ratch with teeth on the leg tube base;
wherein, the handle axis (41) and the pawl axis (43) pass horizontally through the tripod body (13) and are parallel to each other so that, in operation, said rocker (40) engages said pawl (44) which engages a tooth of the ratch and is pressed against the ratch by a spring (46) and the pushing of the handle (41) causes the rocker (40) to move the pawl (44) so as to overcome the resistance of the spring (46) so as to disengage from said tooth.

2. A tripod for camera according to claim 1, wherein in said inner expanding type locking mechanism, a screw (36) connected tightly with the smaller one of two adjacent leg tubes gets through a nut (31), a sheath (25) is installed between them and clings to the inner wall of the bigger one; a conical thread is provided on the screw (36), and on the top of the screw (36) a locking bolt is provided; a conical thread is provided on the nut (31), a rubber ring is provided out of the nut (31), a fixing tip is provided on the top thereof; the leg tube can be locked or opened by rotating the taper screw (36) and the taper nut (31).

3. A tripod for camera according to claim 1, wherein in said inner expanding type locking mechanism inside said leg tubes, the leg tube (18) connects with the tripod body (13) by means of leg tube base (14) and orientation wrap (15); the taper nuts (31, 28, 33) are provided inside the leg tubes (18, 19, 20) respectively; the taper screws (36, 17, 35) are provided on the top of the leg tubes (18, 19, 20) respectively; the taper screw on the leg tube joint is cooperated rotatable with the taper nut within the leg tube.

4. A tripod for camera according to claim 1, wherein the adjusting turntable (02) has a scale (03), the turntable (02) is fixed on a turntable housing (09) with the help of orientation ring (04), and the withdrawing type pothook (55) is provided on the bottom of the tripod central axis.

5. A tripod for camera according to claim 1 or claim 4, wherein the straight part of said pothook (55) passes through a flying ring (52), a rubber sheath (51) and a plug (54) for elevator level (34) vertically, and hangs on the flying ring (52); the rubber sheath (51) is fixed on the flying ring (52); the plug (54) for elevator level clamps the flying ring (52) and is installed on the elevator level (12B); the hook part of the pothook (55) can move up and down along the tripod central axis.

6. A tripod for camera according to claim 1 or claim 4, wherein the central axis of the tripod has a telescopic construction of two or more segments.

7. A tripod for camera according to claim 1, wherein the section of said leg tubes is round or polygonal.

8. A tripod for camera according to claim 1 or claim 7, wherein the surfaces of both the metallic leg tubes and the central axis are covered with carbon fiber layers, which make them into carbon fiber strengthen metallic tubes.

## Patentansprüche

1. Photostativ für eine Kamera, umfassend:
einen Photostativkörper (13);
Beinrohre (18), wobei jedes Beinrohr über eine Beinrohrbasis (14) mit dem Photostativkörper (13) verbunden ist;
eine Mittenachse, die von Höhenverstellbauteilen (12A, 12B) gebildet wird, wobei die Mittenachse bei Gebrauch vertikal durch den Photostativkörper (13) verläuft;
einen Drehteller (02), der am oberen Ende der Mittenachse bereitgestellt ist;
einen gebogenen Haken (55), der am unteren Ende der Mittenachse bereitgestellt ist;
eine Feststellmutter (47), die auf dem Photostativkörper (13) eingebaut ist und dem Feststellen der Mittenachse dient;
einen Feststellmechanismus innerhalb eines jeden Beinrohrs (18), der ein innerer Ausdehnmechanismus ist; und
einen Öffnungs- und Befestigungsmechanismus zum Einstellen des Öffnungswinkels der Beinrohre (18);
**dadurch gekennzeichnet, dass**
der Öffnungs- und Befestigungsmechanismus für jedes Beinrohr umfasst:
eine Griffachse (41), die einen Nocken (40) aufweist, der mit einem Handgriff (16) verbunden ist;
eine Klinkenachse (43), die eine ummantelte Klinke (44) aufweist sowie eine Umhüllung (45) zum Befestigen der Klinke (44);
eine Ratsche mit Zähnen an der Beinrohrbasis,
wobei die Griffachse (41) und die Klinkenachse (43) horizontal und parallel zueinander durch den Photostativkörper (13) verlaufen, so dass im Einsatz der Nocken (40) in die Klinke (44) eingreift, die ihrerseits in einen Zahn der Ratsche eingreift und von einer Feder (46) gegen die Ratsche gedrückt wird, und das Drücken auf den Griff (41) bewirkt, dass der Nocken (40) die Klinke (44) so bewegt, dass sie den Widerstand der Feder (46) überwindet und sich von dem Zahn löst.

2. Photostativ für eine Kamera nach Anspruch 1, wobei in dem Feststellmechanismus, der sich innen ausdehnt:
eine Schraube (36), die fest mit dem kleineren Rohr von zwei benachbarten Beinrohren verbunden ist, durch eine Mutter (31) verläuft, und eine Hülse (25) zwischen den beiden Rohren eingebaut ist und gegen das größere Rohr gedrückt wird;
die Schraube (36) mit einem konischen Gewinde versehen ist und oben auf der Schraube (36) ein Haltebolzen bereitgestellt ist;
die Mutter (31) mit einem konischen Gewinde versehen ist, ein Gummiring außerhalb der Mutter (31) bereitgestellt ist und eine Befestigungsnase oben auf der Mutter vorhanden ist,
wobei man das Beinrohr befestigen oder lösen kann, indem man die konische Schraube (36) und die konische Mutter (31) gegeneinander verdreht.

3. Photostativ für eine Kamera nach Anspruch 1, wobei in dem Feststellmechanismus innerhalb der Beinrohre, der sich innen ausdehnt:
das Beinrohr (18) mit Hilfe einer Beinrohrbasis (14) und einer Ausrichtumhüllung (15) mit dem Photostativkörper (13) verbunden ist;
die konischen Muttern (31, 28, 33) jeweils innerhalb der Beinrohre (18, 19, 20) bereitgestellt sind;
die konischen Schrauben (36, 17, 35) jeweils oben auf den Beinrohren (18, 19, 20) bereitgestellt sind; und
die konische Schraube auf der Beinrohrverbindung durch Drehen mit der konischen Mutter innerhalb des Beinrohrs zusammenarbeitet.

4. Photostativ für eine Kamera nach Anspruch 1, wobei der Einstell-Drehteller (02) eine Skala (03) aufweist, der Drehteller (02) mit Hilfe eines Ausrichtrings (04) an einem Drehtellergehäuse (09) befestigt ist, und der gebogene Zurückziehhaken (55) am unteren Ende der Photostativ-Mittenachse bereitgestellt ist.

5. Photostativ für eine Kamera nach Anspruch 1 oder Anspruch 4, wobei
der gerade Abschnitt des gebogenen Hakens (55) vertikal durch einen Verschiebering (52), einen Gummimantel (51) und einen Pfropfen (54) für das Höhenverstellbauteil (34) verläuft und im Verschiebering (52) hängt;
der Gummimantel (51) an dem Verschiebering (52) befestigt ist;
der Pfropfen (54) für das Höhenverstellbauteil den Verschiebering (52) festklemmt und in das Höhenverstellbauteil (12B) eingebaut ist;
der Hakenabschnitt des gebogenen Hakens (55) sich entlang der Mittenachse des Photostativs aufwärts und abwärts bewegen kann.

6. Photostativ für eine Kamera nach Anspruch 1 oder Anspruch 4, wobei die Mittenachse des Photostativs eine Teleskopanordnung aus zwei oder mehr Segmenten aufweist.

7. Photostativ für eine Kamera nach Anspruch 1, wobei der Querschnitt der Beinrohre rund oder vieleckig ist.

8. Photostativ für eine Kamera nach Anspruch 1 oder Anspruch 7, wobei die Oberflächen sowohl der metallischen Beinrohre als auch der Mittenachse mit Karbonfaserschichten bedeckt sind, so dass durch Karbonfasern verstärkte Metallrohre entstehen.

## Revendications

1. Trépied pour appareil photo comprenant :
- un corps de trépied (13) ;
- des tubes formant pieds (18), chaque tube formant pied étant relié au corps de trépied (13) via une base de tube formant pied (14) ;
- un axe central formé par des leviers élévateurs (12A, 12B), où l'axe central, en service, passe verticalement à travers le corps de trépied (13) ;
- une plaque tournante (02) située sur l'extrémité supérieure de l'axe central ;
- un crochet (55) situé à l'extrémité inférieure de l'axe central ;
- un écrou de verrouillage (47) installé sur le corps de trépied (13) pour verrouiller l'axe central ;
- un mécanisme de verrouillage du type à expansion interne à l'intérieur de chaque tube formant pied (18) ; et
- un mécanisme d'ouverture et de fermeture pour ajuster l'angle d'ouverture des tubes formant pieds (18) ;
**caractérisé en ce que** :
ledit mécanisme d'ouverture et de fermeture comprend, pour chaque tube formant pied :
- un axe de manette (41) comportant un culbuteur (40) relié à une manette (16) ;
- un axe de cliquet (43) comportant un cliquet gainé (44) et une enveloppe (45) pour fixer le cliquet (44) ;
- un rochet pourvu de dents sur la base de tube formant pied ;
où, l'axe de manette (41) et l'axe de cliquet (43) passent horizontalement à travers le corps de trépied (13) et sont parallèles l'un à l'autre de manière que, en service, ledit culbuteur (40) engage ledit cliquet (44) qui engage une dent du rochet et est pressé contre le rochet par un ressort (46) et la poussée de la manette (41) amène le culbuteur (40) à déplacer le cliquet (44) afin de surmonter la résistance du ressort (46) et de le dégager de ladite dent.

2. Trépied pour appareil photo selon la revendication 1, dans lequel dans ledit mécanisme de verrouillage du type à expansion interne, une vis (36) reliée serrée au plus petit des deux tubes formant pieds adjacents passe à travers un écrou (31), une gaine (25) est installée entre eux et s'accroche à la paroi interne du plus grand des tubes formant pieds ; un filetage conique est situé sur la vis (36), et sur le dessus de la vis (36) un boulon de verrouillage est prévu ; un filetage conique est situé sur l'écrou (31), une bague de caoutchouc est prévue hors de l'écrou (31), une pointe de fixation est prévue sur son dessus ; le tube formant pied peut être verrouillé ou ouvert en tournant la vis conique (36) et l'écrou conique (31).

3. Trépied pour appareil photo selon la revendication 1, dans lequel dans ledit mécanisme de verrouillage du type à expansion interne à l'intérieur desdits tubes formant pieds, le tube formant pied (18) se connecte au corps de trépied (13) au moyen de la base de tube formant pied (14) et d'une enveloppe d'orientation (15) ; les écrous coniques (31, 28, 33) sont situés à l'intérieur des tubes formant pieds (18, 19, 20) respectivement ; les vis coniques (36, 17, 35) sont situées sur le dessus des tubes formant pieds (18, 19, 20) respectivement ; la vis conique sur le raccord de tube formant pied coopère en rotation avec l'écrou conique au sein du tube formant pied.

4. Trépied pour appareil photo selon la revendication 1, dans lequel la plaque tournante de réglage (02) comporte une graduation (03), la plaque tournante de réglage (02) est fixée sur un logement de plaque tournante (09) à l'aide d'un anneau d'orientation (04), et le crochet du type à rétraction (55) est situé sur le dessous de l'axe central de trépied.

5. Trépied pour appareil photo selon la revendication 1 ou la revendication 4, dans lequel la partie droite dudit crochet (55) passe à travers un anneau volant (52), une gaine en caoutchouc (51) et un bouchon (54) pour levier élévateur (34) verticalement, et est suspendue sur l'anneau volant (52) ; la gaine en caoutchouc (51) est fixée sur l'anneau volant (52) ; le bouchon (54) pour levier élévateur serre l'anneau volant (52) et est installé sur le levier élévateur (12B) ; la partie formant crochet du crochet (55) peut se déplacer vers le haut et vers le bas le long de l'axe central de trépied.

6. Trépied pour appareil photo selon la revendication 1 ou la revendication 4, dans lequel l'axe central du trépied a une construction télescopique à deux segments ou plus.

7. Trépied pour appareil photo selon la revendication 1, dans lequel la section desdits tubes formant pieds est ronde ou polygonale.

8. Trépied pour appareil photo selon la revendication 1 ou la revendication 7, dans lequel les surfaces des deux tubes formant pieds métalliques et de l'axe central sont recouvertes de couches de fibres de carbone, qui aboutissent à des tubes métalliques renforcés par fibres de carbone.
